# EUROPÄISCHE PATENTANMELDUNG

(11) **EP 2 226 773 A1**
(43) Veröffentlichungstag der Anmeldung: **08.09.2010**
(21) Anmeldenummer: 10154888.1
(22) Anmeldetag: 26.02.2010
(51) Int. Cl.: G08B 13/12, G02B 6/44

(54) **Detektionsvorrichtung zur Detektion von geometrischen Veränderungen in Sperrhindernissen**

(30) Priorität: 04.03.2009 CH 3252009
(71) Anmelder: Wyss, Andreas, 4500 Solothurn (CH)
(72) Erfinder: Wyss, Andreas, 4500, Solothurn (CH); Oberhänsli, Jürg, 5024, Küttigen (CH)
(74) Vertreter: Rentsch & Partner

(57) **Zusammenfassung**

Eine Detektionsvorrichtung (1) zur Detektion von geometrischen Veränderungen einer Struktur, insbesondere von geometrischen Veränderungen in einem Sperrhindernis (5), umfasst eine Kette aus einer Mehrzahl von schwenkbeweglich verbundenen, im wesentlichen starren Gliederelementen (2, 2', 2''). Mindestens ein optischer Wellenleiter (3) verläuft entlang der Kette von Gliederelementen (2, 2', 2"), wobei der optische Wellenleiter (3) in oder auf den Gliederelementen (2) angeordnet und mit diesen form- oder kraftschlüssig verbunden ist. Bevorzugt sind zwei benachbarte Gliederelemente (2, 2') jeweils über ein Scharnierelement (4), insbesondere ein Federelement (41) oder eine Manschette (43), schwenkbeweglich verbunden.

## Beschreibung

### Technisches Gebiet

Die Erfindung betrifft Detektionsvorrichtung zur Detektion von geometrischen Veränderungen in Strukturen, insbesondere von geometrischen Veränderungen in einem Sperrhindernis, sowie Sperrhindernisse mit solchen Detektionsvorrichtungen.

### Stand der Technik

Bei Mauern und Zäunen und anderen Sperrhindernissen mit hohen Sicherheitsanforderungen, beispielsweise bei Haftanstalten, militärischen Anlagen, Kernkraftwerken, aber auch bei Baustellenabsperrungen, wird häufig am oberen Ende eine Stacheldrahtrolle angebracht, um den Überstieg zusätzlich zu erschweren. Stacheldraht auf Rollen wird auch als mobile Barriere beispielsweise für militärische Zwecke verwendet.

Um einen Versuch des Überwindens des Stacheldrahthindernisses schnellstmöglich festzustellen und entsprechende Massnahmen ergreifen zu können, sind aus dem Stand der Technik eine Reihe von Detektionsvorrichtungen bekannt. Beispielsweise können Vibrationen oder Geräusche im Draht detektiert werden, oder Änderungen in einem innerhalb des Drahtgeflechts erzeugten elektromagnetischen Feld. Solche Lösungen weisen jedoch eine inhärent hohe Fehlalarmquote auf, beispielsweise aufgrund von Umwelteinflüssen wie Wind, Regen, Schnee, Temperaturwechsel usw. Sie sind zudem technisch aufwendig und teuer.

Aus EP 0340672 ist eine Vorrichtung bekannt, bei welcher eine Stacheldrahtrolle mit einem in Längsrichtung vorgespannten Detektordraht verbunden ist. Wird quer zur Stacheldrahtrolle eine Kraft ausgeübt, beispielsweise durch das Anlehnen einer Leiter oder durch ein versuchtes Übersteigen des Hindernisses, resultiert auf dem Detektordraht eine Änderung der Zugbelastung, die elektronisch detektiert und zur Auslösung eines Alarms verwendet werden kann. Bei dieser Detektionsvorrichtung können äussere Einflüsse zu Fehlalarmen führen, beispielsweise eine Gewichtsbelastung durch Schnee oder Pflanzen. Temperaturwechsel können zu einer Längenänderung des Detektordrahtes führen, und damit entweder zu einem Verlust an Empfindlichkeit oder wiederum zu Fehlalarmen.

Aus US 4558308 ist ein mäanderförmiges Gittergeflecht aus hohlem Draht für einen Zaun bekannt, bei welchem innerhalb des hohlen Gitterdrahtes ein elektrischer Leiter oder ein optischer Wellenleiter verläuft. Beim Durchtrennen oder Deformieren des Gitters wird der Leiter unterbrochen oder deformiert, was detektiert werden kann. Da die hohlen Gitterdrähte selber Teil des Zauns sind, müssen sie entsprechend stabil ausgestaltet sein. Entsprechend gering ist die Empfindlichkeit.

EP 0073927 zeigt ein Stacheldrahtsystem, bei welchem die Stachelelemente (Spitzen oder Klingen) auf einem hohlen Kerndraht angebracht sind. Innerhalb des hohlen Kerndrahtes ist ein elektrischer Leiter oder ein optischer Wellenleiter angebracht. Der hohle Kerndraht kann Sollbruchstellen aufweisen. Wird der Stacheldraht mechanisch belastet, verformt er sich oder bricht, was zur Beschädigung des Leiters führt. Durch kontinuierliches Überwachen der Eigenschaften des Leiters kann eine Beschädigung des Leiters und damit eine mechanische Belastung des Stacheldrahtsystems detektiert werden. Das genannte Stacheldrahtsystem ist in der Herstellung aufwendig, und muss gegebenenfalls nach einem Alarm ausgetauscht werden.

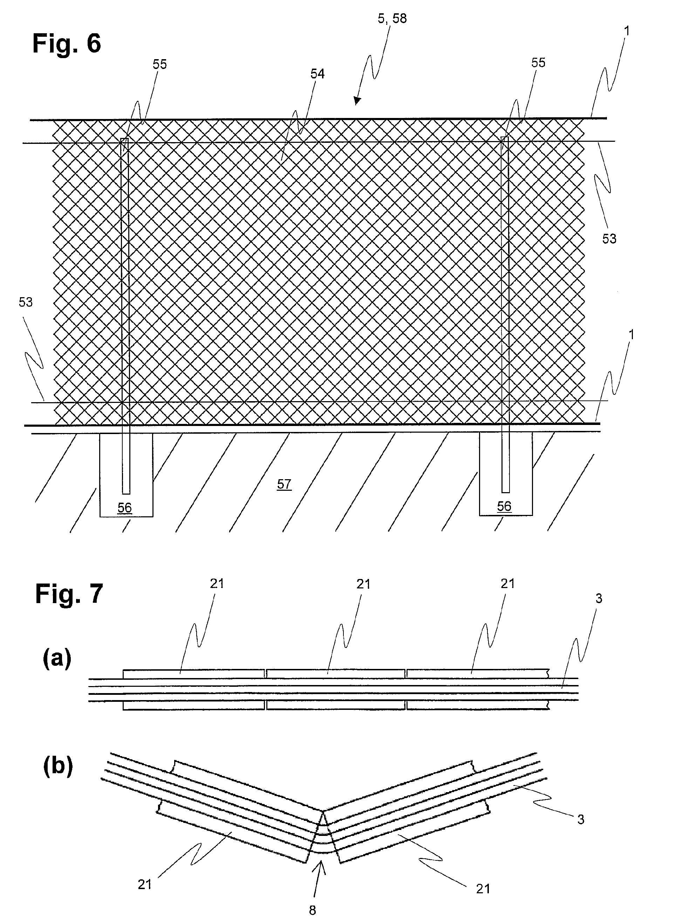

US 5592149 zeigt einen Sicherheitszaun, bestehend aus einem mit einem optischen Wellenleiter hergestellten Geflecht. Wird das Gittergeflecht bei einem Überstiegsversuch deformiert, so verbiegt sich der optische Leiter, und die resultierende Zunahme der Dämpfung des Leiters wird detektiert. Der optische Leiter kann in einer losen Kette von Hülsen angeordnet sein, was den lokalen Biegungsradius des Leiters bei mechanischer Belastung verringert. Figur 7(a) zeigt einen solchen optischen Leiter 3, wie er aus dem Stand der Technik bekannt ist. Die einzelnen Hülsen 21 sind nicht verbunden, und der Abstand zwischen den Hülsen 21 ist klein. Dies kann bei einer Deformation des Geflechts (Figur 7(b)) sehr leicht zu einer Überdehnung oder gar zu einer Knickung des optischen Leiters 3 im Bereich der Biegung 8 führen, was diesen dauerhaft beschädigen kann.

### Aufgabe der Erfindung

Aufgabe der Erfindung ist es, eine Detektionsvorrichtung zur Verfügung zu stellen, welche die oben erwähnten und andere Nachteile nicht aufweist. Insbesondere soll eine solche Detektionsvorrichtung eine hohe Empfindlichkeit bei gleichzeitig geringer Anfälligkeit für Fehlalarme aufweisen.

Weiter soll eine solche Detektionsvorrichtung kostengünstig sein in der Herstellung und Anwendung. Die Detektionsvorrichtung soll einfach aufzubauen und zu betreiben sein, und einen geringen Wartungsaufwand benötigen.

Eine erfindungsgemässe Detektionsvorrichtung soll zudem möglichst unempfindlich sein gegenüber Witterungseinflüssen, sowie eine lange Lebenswartung und eine geringe Ausfallwahrscheinlichkeit aufweisen.

Eine andere Aufgabe der Erfindung ist es, ein Sperrhindernis zur Verfügung zu stellen, bei welchem Überwindungsversuche zuverlässig festgestellt werden können.

Diese und andere Aufgaben werden gelöst durch erfindungsgemässe Detektionsvorrichtungen sowie durch ein erfindungsgemässes Sperrhindernis gemäss den unabhängigen Ansprüchen. Weitere bevorzugte Ausführungsformen sind in den abhängigen Ansprüchen gegeben.

### Darstellung der Erfindung

Eine erfindungsgemässe Detektionsvorrichtung ist vorgesehen zur Detektion von geometrischen Veränderungen in einer Struktur, insbesondere von geometrischen Veränderungen in einem Sperrhindernis. Ein solches Sperrhindernis kann insbesondere einen Zaun, eine Mauer und/oder eine Stacheldrahtrolle umfassen. Eine erfindungsgemässe Detektionsvorrichtung umfasst eine Kette aus einer Mehrzahl von schwenkbeweglich verbundenen, im Wesentlichen starren Gliederelementen, sowie mindestens einen optischen Wellenleiter, der entlang der Kette von Gliederelementen verläuft. Der optische Wellenleiter ist in und/oder auf den Gliederelementen angeordnet und mit diesen form- und/oder kraftschlüssig verbunden. Benachbarte Gliederelemente jeweils über ein Scharnierelement schwenkbeweglich verbunden. Ein solches Scharnierelement kann beispielsweise ein Federelement, bevorzugt eine Schraubenfeder, oder eine elastische Manschette umfassen.

Eine erfindungsgemässe Detektionsvorrichtung wird vorteilhaft auf und/oder in der Struktur eines Sperrhindernisses angeordnet, und an mindestens einem Punkt mit der Struktur des Sperrhindernisses verbunden. Auf diese Weise können äussere geometrische Veränderungen der Struktur, beispielsweise bei einer Deformation einer Stacheldrahtrolle oder eines Zaunes bei einem Überstiegsversuch, in bestimmter und kontrollierter Weise in Änderungen der Biegungswinkel des optischen Wellenleiters umgesetzt werden. Diese geometrischen Veränderungen des optischen Wellenleiters führen zu einer Änderung der Dämpfung des Wellenleiters, die detektiert und zum Feststellen eines Alarmereignisses ausgewertet werden können. Da die resultierenden Biegungsradien des optischen Leiters sehr viel kleiner sind, als wenn bei gleicher Deformation der Stacheldrahtrolle beispielsweise ein optischer Leiter direkt mit der Stacheldrahtrolle verbunden wird, ist eine solche erfindungsgemässe Detektionsvorrichtung sehr empfindlich auch auf geringe geometrische Änderungen. Die Verwendung von Scharnierelementen zwischen den einzelnen Gliederelementen der Detektionsvorrichtung führt dazu, dass bei der Änderung der Winkel zwischen zwei Gliederelementen durch die Deformation der Struktur eines Sperrhindernisses der optische Leiter in einer wohl definierten Art und Weise verformt wird. Da der Abstand zwischen zwei benachbarten Gliederelementen durch das Scharnierelement festgelegt ist, kann der optische Leiter selbst bei sehr starker Verformung der Detektionsvorrichtung an der Biegestellen zwischen den Gliederelementen nicht überdehnt oder gar genickt werden.

In einer vorteilhaften Ausführungsform einer solchen erfindungsgemässen Detektionsvorrichtung sind ein Teil oder alle der Gliederelemente als Hohldraht oder Röhrenelement ausgestaltet. In einer anderen Variante einer erfindungsgemässen Detektionsvorrichtung sind die Gliederelemente abwechslungsweise als Hohldraht oder Röhrenelement und als Kugelgelenkelement ausgestaltet.

Eine andere erfindungsgemässe Detektionsvorrichtung, welche die Aufgabe der Erfindung löst, umfasst eine Kette aus einer Mehrzahl von schwenkbeweglich verbundenen, im Wesentlichen starren Gliederelementen, sowie mindestens einen optischen Wellenleiter, der entlang der Kette von Gliederelementen verläuft. Der optische Wellenleiter ist auf den Gliederelementen angeordnet und mit diesen form- und/oder kraftschlüssig verbunden.

Da der optische Wellenleiter bei dieser erfindungsgemässen Detektionsvorrichtung auf dem Gliederelement selber angeordnet ist, kann eine solche erfindungsgemässe Detektionsvorrichtung sehr kosteneffizient hergestellt werden. Beispielsweise kann der optische Leiter auf einem Gliederelement festgeklebt oder in einem Klickverschluss festgeklemmt werden. Als Gliederelemente können z.B. kostengünstig Blechstanzteile oder Plastikteile verwendet werden.

Bei einer weiteren erfindungsgemässen Detektionsvorrichtung mit eine Kette aus einer Mehrzahl von schwenkbeweglich verbundenen, im Wesentlichen starren Gliederelementen, sowie mindestens einem optischen Wellenleiter, der entlang der Kette von Gliederelementen verläuft, bestehen die Gliederelemente aus zwei Hälften, zwischen denen der optische Wellenleiter form- und/oder kraftschlüssig fixiert ist.

Diese Variante einer erfindungsgemässen Detektionsvorrichtung kann ebenfalls sehr kostengünstig hergestellt werden, indem beispielsweise zwei Blechstreifen oder Plastikstreifen ab Rolle parallel zusammengeführt und zwischen diesen beiden Hälften der optische Wellenleiter durchgeführt wird. Die Streifen werden in regelmässigen Abständen zu den Gliederelementen abgelängt und entlang den Längskanten miteinander verbunden.

In einer vorteilhaften Ausführungsform der beiden vorgenannten erfindungsgemässen Detektionsvorrichtungen sind zwei benachbarte Gliederelemente nur durch den optischen Wellenleiter schwenkbeweglich verbunden.

Ein Teil oder alle der Gliederelemente der oben stehenden erfindungsgemässen Detektionsvorrichtungen können als versteifter Bereich des optischen Wellenleiters ausgestaltet sein, beispielsweise durch Aufkleben oder Klemmen oder sonstiges Befestigen des optischen Wellenleiters auf einem linearen Versteifungselement, oder durch einen den optischen Wellenleiter umgebenden Hohldraht oder ein Röhrenelement.

Die Gliederelemente der erfindungsgemässen Detektionsvorrichtung können biegefeste Streifen umfassen, beispielsweise Blechstanzstreifen, Blechteile oder längliche Plastikformteile.

Die Länge der Gliederelemente von erfindungsgemässen Detektionsvorrichtungen beträgt beispielsweise zwischen 15 cm und 30 cm, und bevorzugt zwischen 20 und 25 cm beträgt.

Bei einer weiteren vorteilhaften Ausführungsform einer der vorgenannten Detektionsvorrichtungen ist eine Sendereinheit vorgesehen, eingerichtet zur Einspeisung eines Lichtsignals in den mindestens einen optischen Wellenleiter. Ebenso ist vorteilhaft eine Empfängereinheit vorhanden, eingerichtet zur Detektion eines aus dem optischen Wellenleiter austretenden Lichtsignals. Diese Sendereinheit und Empfängereinheit können an zwei verschiedenen Enden des optischen Wellenleiters angeordnet sein, oder am gleichen Ende des optischen Wellenleiters. Beim letzteren Fall ist vorzugsweise am anderen Ende des Wellenleiters ein Reflektorelement angeordnet, welches dazu eingerichtet ist, ein aus dem optischen Wellenleiter austretendes Lichtsignal zurück in den optischen Wellenleiter zu reflektieren.

Eine erfindungsgemässe Detektionsvorrichtung wird vorteilhaft auf und/oder in der Struktur eines Sperrhindernisses angeordnet, und an mindestens einem Punkt mit der Struktur des Sperrhindernisses verbunden. Auf diese Weise können äussere geometrische Veränderungen der Struktur, beispielsweise bei einer Deformation einer Stacheldrahtrolle oder eines Zaunes bei einem Überstiegsversuch, in bestimmter und kontrollierter Weise in Änderungen der Biegungswinkel des optischen Wellenleiters umgesetzt werden. Diese geometrischen Veränderungen des optischen Wellenleiters führen zu einer Änderung der Dämpfung des Wellenleiters, die detektiert und zum Feststellen eines Alarmereignisses ausgewertet werden können. Da die resultierenden Biegungsradien des optischen Leiters sehr viel kleiner sind, als wenn bei gleicher Deformation der Stacheldrahtrolle beispielsweise ein optischer Leiter direkt mit der Stacheldrahtrolle verbunden wird, ist eine solche erfindungsgemässe Detektionsvorrichtung sehr empfindlich auch auf geringe geometrische Änderungen.

Bei einem erfindungsgemässen Sperrhindernis ist demnach eine erfindungsgemässe Detektionsvorrichtung vorteilhaft derart mit der Struktur des Sperrhindernisses verbunden, dass eine Deformation beispielsweise einer Stacheldrahtrolle eine Änderung der Geometrie der Detektionsvorrichtung verursacht, nämlich die Änderung mindestens eines Winkels zwischen zwei benachbarten Gliederelementen der Detektionsvorrichtung.

Eine andere vorteilhafte Ausführungsform eines erfindungsgemässen Sperrhindernisses umfasst einen Zaun, wobei das untere und/oder das obere Ende des Zauns um eine bestimmte Länge über einen Spanndraht oder eine Querstange des Zauns hinausragt, und eine Detektionsvorrichtung am genannten unteren und/oder oberen Ende des Zauns angebracht ist. Eine Deformation des oberen oder unteren Endes des Zauns verursacht dann eine Änderung der Geometrie der Detektionsvorrichtung.

Die Verwendung von optischen Wellenleitern hat den Vorteil, das eine erfindungsgemässe Detektionsvorrichtung elektromagnetisch passiv ist. Sie ist weder durch äussere elektromagnetische Einflüsse störbar oder beeinflussbar, noch gibt sie selber detektierbare elektromagnetische Strahlung ab. Optische Wellenleiter sind zudem unempfindlich gegenüber Feuchtigkeit, und können auch in explosionsgefährdeten Bereichen eingesetzt werden.

### Kurze Beschreibung der Zeichnungen

Zum besseren Verständnis der vorliegenden Erfindung wird nachfolgend auf die Zeichnungen Bezug genommen. Diese zeigen lediglich Ausführungsbeispiele des Erfindungsgegenstands.
- Figur 1: zeigt schematisch ein Sperrhindernis in Form einer Stacheldrahtrolle, mit einer an der Stacheldrahtrolle angebrachten erfindungsgemässen Detektionsvorrichtung.
- Figur 2: zeigt schematisch im Querschnitt den Bereich des Scharnierelements in einer Ausführungsform einer erfindungsgemässen Detektionsvorrichtung, (a) in gestrecktem Grundzustand, und (b) in einem geknickten Zustand.
- Figur 3: zeigt schematisch im Querschnitt den Bereich des Scharnierelements von zwei weiteren Ausführungsformen einer erfindungsgemässen Detektionsvorrichtung.
- Figur 4: zeigt schematisch verschiedene Varianten der Anordnung der Sender- und Empfängereinheiten einer erfindungsgemässen Detektionsvorrichtung, und der Anordnung der Detektionsvorrichtung auf dem Stacheldrahthindernis.
- Figur 5: zeigt schematisch eine weitere vorteilhafte Variante einer erfindungsgemässen Detektionsvorrichtung mit Gliederelementen in der Form eines versteiften Bereichs des optischen Wellenleiters.
- Figur 6: zeigt eine andere Ausführungsform eines Sperrhindernisses in Form eines Diagonalgeflechts, mit einer am Zaungeflecht angebrachten erfindungsgemässen Detektionsvorrichtung.
- Figur 7: zeigt einen optischen Leiter, wie er aus dem Stand der Technik bekannt ist.

### Ausführung der Erfindung

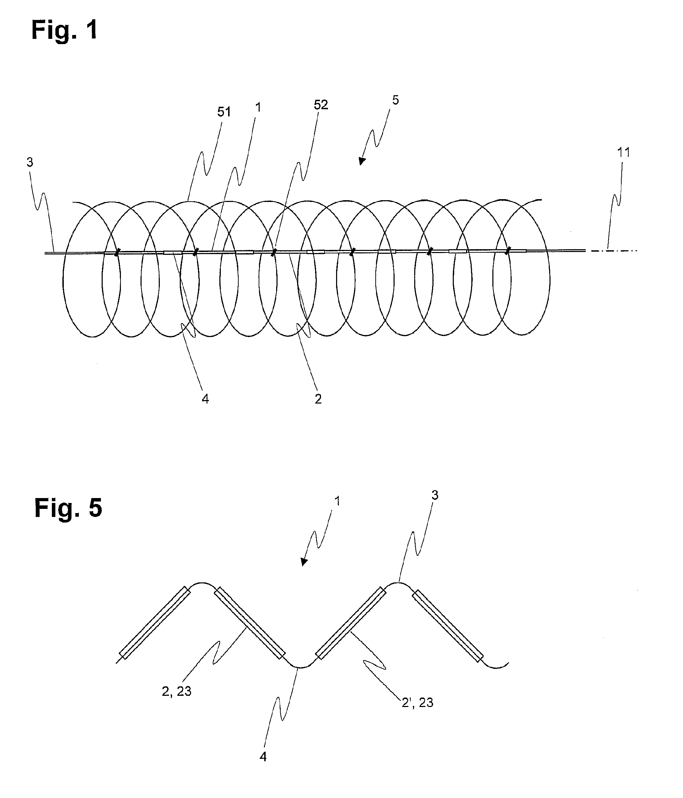

In Figur 1 wird schematisch eine Stacheldrahtrolle 51 gezeigt, mit einer an der Stacheldrahtrolle 51 angebrachten 52 erfindungsgemässen Detektionsvorrichtung 1. Die Stacheldrahtrolle 51 kann Teil eines Sperrhindernisses 5 sein. Beispielsweise kann am oberen Ende einer Mauer oder eines Zaunes mit geeigneten Mitteln eine Stacheldrahtrolle 51 angeordnet sein, um ein Übersteigen des Hindernisses zu erschweren. Die Stacheldrahtrolle 51 kann aber auch für sich allein das Sperrhindernis 5 bilden.

Die dargestellte erfindungsgemässe Detektionsvorrichtung 1 umfasst im wesentlichen eine Kette von mehreren Gliederelementen 2, welche über zwischen diesen angeordnete Scharnierelemente 4 schwenkbeweglich miteinander verbunden sind. Über die gesamte Länge der Detektionsvorrichtung 1 ist im Inneren der Gelenkelemente 2 ein optischer Wellenleiter 3 angeordnet. In den optischen Wellenleiter 3 wird durch eine (nicht dargestellte) Sendereinheit ein konstantes oder periodisches Lichtsignal eingespeist, und mit einer Empfängereinheit das aus dem Wellenleiter 3 austretende Lichtsignal detektiert. Mit einer Auswerteeinheit wird dann eine Änderung der Eigenschaften des optischen Wellenleiters 3 bestimmt und ausgewertet.

Die erfindungsgemässe Detektionsvorrichtung 1 ist im Wesentlichen gestreckt entlang einer Längsachse der Stacheldrahtrolle 51 angeordnet, und an einer Mehrzahl von Befestigungspunkten 52 mit der Stacheldrahtrolle verbunden. Die Detektionsvorrichtung kann beispielsweise mittels crimpen mit dem Stacheldraht verbunden werden. Möglich ist auch eine Befestigung mittels losen Ringen, wobei bei dieser Variante in Längsrichtung 11 eine gewisse Beweglichkeit zwischen Stacheldraht und Detektionsvorrichtung verbleibt. Vorteilhaft ist die Befestigung derart ausgestaltet, dass ein Öffnen der Verbindungen schwierig und mit eine erheblichen Kraftaufwand verbunden ist.

Die Detektionsvorrichtung kann aufgrund Ihrer kettenartigen Struktur jedem beliebigen Verlauf eines Stacheldrahthindernisses folgen. Im gezeigten Beispiel ist die erfindungsgemässe Detektionsvorrichtung in der Stacheldrahtrolle 51 gestreckt angeordnet. Diese Variante hat den Vorteil, dass die Empfindlichkeit gegenüber Geometrieänderungen am höchsten ist. Es ist jedoch auch möglich, die Detektionsvorrichtung innerhalb einer Stacheldrahtrolle in Kurven oder im Zickzack anzuordnen.

Wenn ein Eindringling versucht, das Sperrhindernis 5 zu überwinden, beispielsweise durch Übersteigen oder Durchtrennen, wird er unweigerlich die Stacheldrahtrolle 51 deformieren. Diese Bewegung wird aufgrund der Befestigungspunkte 52 als Kraft quer zur Längsachse 11 auf die Detektionsvorrichtung 1 übertragen. Als Folge davon wird die erfindungsgemässe Detektionsvorrichtung im Bereich eines oder mehrerer Scharnierelemente 4 um einen gewissen Winkel geknickt. Gleichzeitig wird auch der Biegungsradius des im Inneren der Detektionsvorrichtung 1 verlaufenden optischen Wellenleiters 3 verkleinert. Dies führt zu einem grösseren Verlust an Lichtleistung zwischen dem Kern und der Begrenzungsschicht des Wellenleiters. Diese sogenannte geometrische Dämpfung führt schliesslich zu einer erhöhten Dämpfung des Wellenleiters 3 insgesamt.

Durch Vergleich der eingespeisten und austretenden Lichtleistung kann laufend die Dämpfung bestimmt werden. Wird die Geometrie der Detektionsvorrichtung geändert, ändert sich auch die Dämpfung des optischen Wellenleiters. Aufgrund der Geschwindigkeit und des Ausmasses einer Änderung der Dämpfung können natürliche Ereignisse von alarmauslösenden Ereignissen unterscheiden werden. Fällt beispielsweise Schnee oder Laub auf das zu überwachende Stacheldrahthindernis, so wird aufgrund des Gewichts der Stacheldraht verformt, und damit auch die Geometrie der damit verbundenen Detektionsvorrichtung. Die daraus folgende Änderung der Dämpfung verläuft erfolgt vergleichsweise langsam, so dass kein Alarm ausgelöst wird. Der Einfluss von Wind und Regen wiederum kann im Stacheldraht des Hindernisses Vibrationen und Schwingungen verursachen. Die damit zusammenhängenden Dämpfungsänderungen sind jedoch vergleichsweise gering. Selbst wenn eine Änderung der Geometrie der Detektionsvorrichtung, an vielen Stellen gleichzeitig aufgrund von starkem Wind, in einer grossen Gesamtänderung der Dämpfung resultiert, sind die Änderungen zeitlich verteilt, so dass wiederum die Änderungsgeschwindigkeit klein bleibt. Die Auswertungselektronik kann so wiederum einen Fehlalarm verhindern.

Wird hingegen der Stacheldraht innerhalb eines kurzen Zeitrahmens deformiert, beispielsweise Zehntelsekunden bis mehrere Sekunden, zum Beispiel beim Anstellen einer Leiter an den Stacheldraht, beim Überwerfen einer Decke, etc., so führt dies zu einer grossen Änderungsgeschwindigkeit der Dämpfung, die die Auswerteeinheit als Alarmereignis bewerten wird. Wird die Detektionsvorrichtung gar durchtrennt, so kann die Auswertelogik den sehr schnellen Anstieg der Dämpfung auf unendlich als Sabotageereignis erkennen. Die mit der Unterscheidung von natürlichen Ereignissen von Alarmereignissen und Sabotageereignissen zusammenhängenden Parameter der Auswertelogik können einfach an die jeweiligen Gegebenheiten angepasst werden.

Um tieffrequentes Rauschen in der gemessenen Dämpfung zu vermeiden, kann das Lichtsignal auch moduliert werden. Neben der Messung der Dämpfung können auch andere Auswertungsmethoden verwendet werden, beispielsweise die Auswertung von Interferenzeffekten, wie beispielsweise Speckle-Mustern. Aus dem Stand der Technik ist dazu eine Reihen von Methoden bekannt.

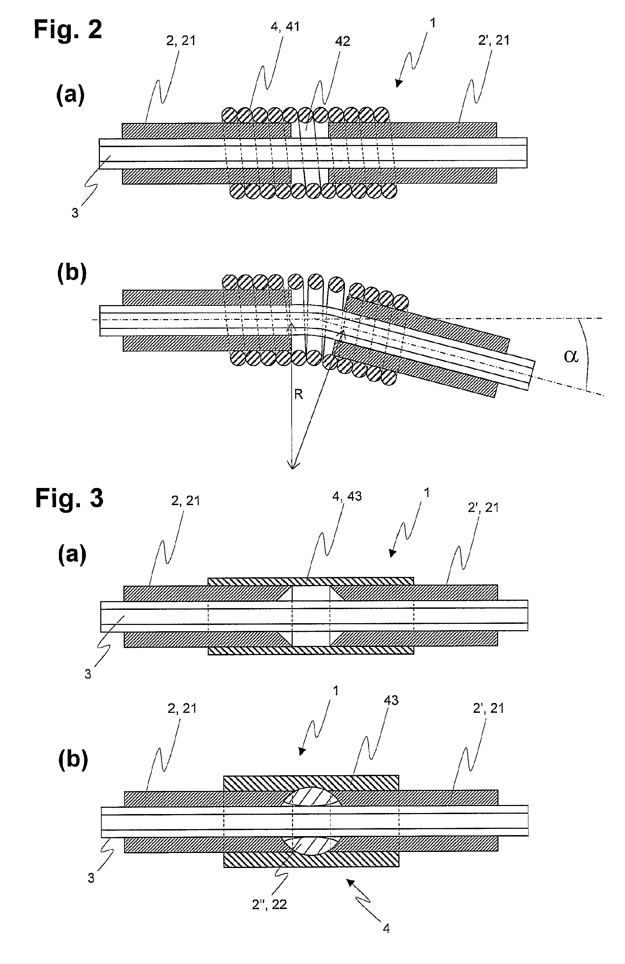

Eine vorteilhafte Ausführungsform einer erfindungsgemässen Detektionsvorrichtung 1 ist schematisch als Querschnitt in Figur 2 dargestellt, mit einem Ausschnitt im Bereich eines Scharnierelements 4. Die Gliederelemente 2, von denen nur jeweils ein Ende gezeigt ist, sind als Hohldraht bzw. Röhrenelement 21 ausgestaltet. Die Gliederelemente 4 können aus Metall, beispielsweise Edelstahl, gefertigt sein, oder aus einem geeigneten, witterungsbeständigen Kunststoffmaterial oder Kompositmaterial. Benachbarte Gliederelemente 2, 2' sind mit einem Scharnierelement 4 schwenkbeweglich verbunden. In der gezeigten Ausführungsform ist das Scharnierelement 4 als Schraubenfederelement 41 ausgestaltet. Dieses wirkt primär als Scharnier. Bei entsprechender Wahl der Federkraftstärke setzt das Federelement 41 zudem einer Knickbewegung der Detektionsvorrichtung einen gewissen Widerstand entgegen, und wirkt so als mechanische Schwellwertbegrenzung.

Die einzelnen Hohldrahtabschnitte 21 bilden eine Kette, durch die der optische Wellenleiter 3 verläuft. Zwischen zwei Gliederelementen 2, 2' ist jeweils eine Lücke 42 angeordnet, welche die nötige Bewegungsfreiheit der Gliederelemente für die Schwenkbewegung erlaubt. Dies vermeidet eine Überdehnung oder Knickung des optischen Wellenleiters. Werden nun zwei benachbarte Gliederelemente 2, 2' im Bereich des Scharnierelements 4 um einen Winkel α verschwenkt (vgl. Figur 2 (b)), so wird der optische Wellenleiter 3 gebogen, mit einem Biegungsradius R. Diese Kurve im Wellenleiter führt zu einer verminderten Totalreflexion in diesem Bereich, und damit zu einem Verlust an Lichtleistung und einem Anstieg der Dämpfung.

Als vorteilhafter Wert für die einzelnen Gliederelemente hat sich eine Länge zwischen 15 cm und 30 cm ergeben, bevorzugt zwischen 20 und 25 cm. Die Gliederelemente können Edelstahlröhrchen sein, beispielsweise mit einem Aussendurchmesser von 2 bis 5 mm. Bei einem Aussendurchmesser vom 3 mm und einem Innendurchmesser von 1.5 mm kann in einem solchen Gliederelement 2 dann z.B. ein optischer Wellenleiter 3 mit einem Durchmesser zwischen 1 mm und 1.5 mm angeordnet werden. Ein gewisses, geringes Spiel ist vorteilhaft um das Einziehen des optischen Leiters 3 zu erleichtern. Das Spiel sollte jedoch auch nicht zu gross sein, um einen reproduzierbaren Zusammenhang zwischen der Geometrieänderung der Detektionsvorrichtung und der Biegungsänderung des optischen Leiters 3 sicherzustellen.

Als optischer Wellenleiter können Glasfasern oder Polymer-optische Fasern (POF) verwendet werden. Glasfaser-Wellenleiter weisen eine geringe Dämpfung auf, und sind darum für längere Leitungen (Distanz Sender-Empfänger) geeignet. Sie sind jedoch wesentlich teurer als POF, und empfindlicher gegenüber Bruch. POF bestehen in der Regel aus einem lichtleitenden Kern aus Polymethylmethacrylat, und einer dünnen Reflexionsmantelschicht aus fluoriertem Polymethylmethacrylat mit tieferem Brechungsindex. Zusätzlich kann auch eine zusätzliche Schutzschicht oder ein Schutzmantel vorgesehen sein. POF weisen eine vergleichsweise hohe Dämpfung auf, und sind darum nur für kürzere Leitungslängen geeignet, beispielsweise bis 100 m. Hingegen sind die Empfindlichkeit gegen Bruch und der minimale Biegeradius sowie die Kosten wesentlich geringer.

Die Ausführung der Scharnierelemente 4 einer erfindungsgemässen Detektionsvorrichtung als Schraubenfedern 41 stellt eine kontrollierte Schwenkbeweglichkeit zwischen den Gliederelementen 2, 2' in alle Richtungen sicher. Es sind jedoch auch andere Varianten möglich. So zeigt beispielsweise Figur 3(a) eine Ausführungsform, bei welcher zwei benachbarte Gliederelemente 2, 2' über eine aussen an den Röhrenelementen 21 anliegende und mit diesen form- und/oder kraftschlüssig verbundene Manschette 43 schwenkbeweglich verbunden sind. Die Manschette kann beispielsweise aus einem geeigneten elastischen Kunststoffmaterial gefertigt sein. Im gezeigten Beispiel sind die Enden der Röhrenelemente angefast, um die mechanische Belastung des optischen Wellenleiters zu verringern.

Eine weitere mögliche Ausführungsform einer erfindungsgemässen Detektionsvorrichtung ist in Figur 3(b) gezeigt. Bei dieser Variante ist zwischen zwei röhrenförmigen Gliederelementen 2, 2', 21 jeweils ein Gliederelement 2" in der Form eines Kugelgelenkelements 22 angeordnet. Eine äussere Manschette 43 aus einem geeigneten elastischen Material hält die Elemente 2, 2', 2" in Position. Der innere Durchgang des Kugelgelenkelements 22 für den optischen Leiter 3 ist gegen aussen aufgeweitet, um eine Schwenkbewegung überhaupt zu ermöglichen. Die Stirnflächen der Röhrenelemente 21 sind an die Form des Kugelgelenkelements 22 angepasst. Manschette 43, Kugelgelenkelement 22 und die Enden der Röhrenelemente bilden somit zusammen das Scharnierelement 4.

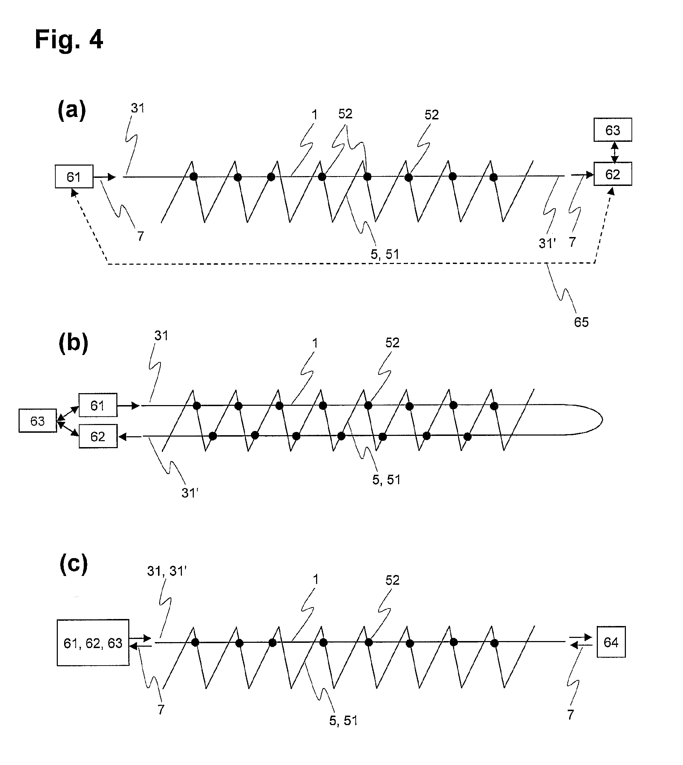

Die Installation einer erfindungsgemässen Detektionsvorrichtung 1 auf einem Sperrhindernis und die Positionierung der Sendereinheit und Empfängereinheit können auf verschiedene Arten erfolgen. Figur 4 zeigt zur Erläuterung schematisch verschiedene Varianten einer Sperrvorrichtung 5 mit einem Stacheldrahthindernis 51 und einer erfindungsgemässen Detektionsvorrichtung 1. Die Detektionsvorrichtung ist mit einer Mehrzahl von Befestigungspunkten 52 mechanisch an die Stacheldrahtrolle 51 gekoppelt.

In der Variante wie gezeigt in Figur 4(a) ist an einem ersten Ende 31 des optischen Wellenleiters 3 eine Sendereinheit 61 angeordnet, mit welcher ein Lichtsignal 7 in den Wellenleiter eingespeist werden kann. An anderen Ende 31' des Wellenleiters 3 ist eine Empfängereinheit 62 angeordnet, mit welcher das aus dem Wellenleiter austretende Lichtsignal 7 detektiert werden kann. Aus dem Stand der Technik ist eine Vielzahl von Lösungen für die Erzeugung von Lichtsignalen bekannt, deren Einspeisung in optische Wellenleiter und deren Detektion. Eine Auswerteeinheit 63 wertet das detektierte Lichtsignal aus, und generiert gegebenenfalls Alarmmeldungen, die an ein übergeordnetes Überwachungssystem weitergeleitet werden können.

Im gezeigten Beispiel sind die Sendereinheit 61 und die Empfängereinheit 62 räumlich getrennt. Da durch äussere Ereignisse verursachte Dämpfungsänderungen durch Schwankungen in der Sendeleistung überdeckt werden können, was die Empfindlichkeit der Detektionsvorrichtung senken würde, muss nach einer anfänglichen Kalibrierung der Detektionsvorrichtung eine sehr stabile Lichtsendeleistungen gewährleistet sein. Alternativ können auch Informationen über die Sendeleistung elektronisch zwischen den beiden Einheiten 61, 62 ausgetauscht werden, was jedoch eine zusätzliche Messelektronik bedingt, oder es wird wie in Figur 4(a) dargestellt ein zur aktuellen Sendeleistung proportionales Referenz-Lichtsignal über eine zweite optische Leitung 65 von der Sendereinheit zur Empfängereinheit geschickt. Eine solche Lösung ist aufwendiger, weil zusätzliche Installationen notwendig sind. Die Variante aus Figur 4(a) wird deshalb bevorzugt eingesetzt, wenn das Sperrhindernis kreisförmig angelegt ist, so dass Sender und Empfänger am gleichen Ort angeordnet werden können.

In einer vorteilhaften weiteren Variante, wie sie in Figur 4(b) gezeigt ist, verläuft die Detektionsvorrichtung in Form einer Schleife, welche im Hindernis 5 angeordnet ist. Beide Enden 31, 31' des optischen Wellenleiters 3 und damit auch Sendereinheit 61 und Empfängereinheit 62 befinden sich am gleichen Ort. Idealerweise können auf diese Art Sendereinheit 61, Empfängereinheit 62 und Auswerteeinheit 63 in einem Gehäuse integriert angeordnet werden. Da die mechanische Kopplung zwischen Stacheldrahtrolle 51 und Detektionsvorrichtung 1 aufgrund der grösseren Anzahl Verbindungspunkte 52 erhöht ist, ist die Gesamtempfindlichkeit der Detektionsvorrichtung auf mechanische Verformungen grösser.

Alternativ ist es auch möglich, am entfernten Ende 31' des Wellenleiters 3 einen Reflektor 64 anzuordnen, welcher das ankommende Lichtsignal 7 zurück in den Wellenleiter reflektiert, wie in Figur 4(c) dargestellt. Auf diese Weise kann auf eine Schleife verzichtet werden, was den Materialverbrauch und damit die Installationskosten senkt. Da das Lichtsignal 7 zudem jede Stelle des Wellenleiters 3 zweimal durchläuft, verdoppelt sich die Dämpfungsänderung im Lichtwellenleiter bei gleicher mechanischer Verformung der Detektionsvorrichtung, was einer Erhöhung der Empfindlichkeit entspricht.

Noch eine weitere vorteilhafte Variante einer erfindungsgemässen Detektionsvorrichtung 1 ist in Figur 5 dargestellt. Bei dieser Ausführungsform sind die Gliederelemente 2, 2' als versteifter Bereich des optischen Wellenleiters 3 ausgestaltet, indem dieser auf einem Versteifungselement 23 formschlüssig oder kraftschlüssig angeordnet ist. Ein solches Versteifungselement 23 kann im einfachsten Fall ein länglicher Blechstreifen sein, auf dem der optische Wellenleiter 3 beispielsweise aufgeklebt wird. Der optische Wellenleiter kann auch sandwichartig zwischen zwei Blechstreifen eingeklemmt werden. Benachbarte Gliederelemente 2, 2' sind nur durch den optischen Wellenleiter 3 schwenkbeweglich verbunden, so das dieser alleine im nicht versteiften Bereich das Scharnierelement 4 bildet.

Die gezeigte Variante hat gegenüber den weiter oben stehenden Ausführungsformen den Vorteil, dass sie in der Fertigung weniger aufwendig ist, da der optische Wellenleiter nicht in ein Röhrenelement eingeführt werden muss, und keine separaten Scharnierelemente notwendig sind. Die Vorrichtung kann zudem leichter ab Rolle zur Montage auf einem Sperrhindernis bereitgestellt werden. Die Funktionalität der erfindungsgemässen Detektionsvorrichtung ist auch bei dieser sehr reduzierten Ausgestaltung gleichermassen gegeben. Hingegen ist der Schutz der Detektionsvorrichtung gegen mechanische Beschädigung reduziert. Diese Ausführungsform eignet sich deshalb speziell für Anwendungen, bei der der Anschaffungspreis beispielsweise wegen einer kurzen Einsatzzeit, oder grosser auf Vorrat bereit zu haltender Mengen relevant ist. Ein mögliches Beispiel sind deshalb schnell aufbaubare mobile Sperrhindernisse für den militärischen oder zivilen Einsatz, beispielsweise zur Überwachung von lediglich temporär aufgebauten Stacheldrahthindernissen oder Baustellenabsperrungen.

Eine weitere vorteilhafte Ausführungsform eines Sperrhindernisses 5 mit einer erfindungsgemässen Detektionsvorrichtung 1 ist in Figur 6 dargestellt. Gezeigt ist ein Ausschnitt eines Sperrhindernisses 5 in der Form eines Zauns 58, mit Blick auf die Front des Zauns. Das Geflecht des Zauns 58, im gezeigten Beispiel ein Diagonalgeflecht 54, ist in vertikaler Richtung zwischen zwei oder mehr Spanndrähten 53 aufgespannt, welche zwischen Pfosten 55 gespannt sind. Anstelle eines Spanndrahtes 53 kann auch eine Querstange verwendet werden. In horizontaler Richtung erfolgt die Aufspannung des Zauns in der üblichen Art und Weise. Typischerweise beträgt die Maschenweite eines Diagonalgeflechts 5 cm, und die Dicke des Drahts beträgt beispielsweise 2.5 mm.

Am oben liegenden Ende des Zaunes ragt das Diagonalgeflecht 54 nun anderthalb Maschen über den oberen Spanndraht 53 hinaus. Der darüber liegende Teil des Geflechts wird also nicht durch die Spanndrähte 53 aufgespannt, sondern steht im Prinzip ungestützt auf. An der oberen Kante oberen des Zaunes 58 ist eine erfindungsgemässe Detektionsvorrichtung 1 angebracht (vereinfacht dargestellt als dickere schwarze Linie), welche über eine Mehrzahl von Befestigungspunkten (nicht gezeigt) mit dem Diagonalgeflecht 54 verbunden ist. Beispielsweise kann die Detektionsvorrichtung 1 an den Abschlussdraht am Rand des Zauns angecrimpt sein. Alternativ kann auch die Detektionsvorrichtung 1 in das Diagonalgeflecht 54 eingeschlauft sein, beispielsweise in die oberste Maschenreihe.

Versucht nun ein Eindringling den Zaun 5, 58 zu überklettern oder stellt er eine Leiter an, so wird er unvermeidbar die ungestützte obere Kante des Zauns 58 niederdrücken oder deformieren, maximal bis zum oberen Spanndraht 53. Dies führt zu einer Veränderung der Geometrie der erfindungsgemässen Detektionsvorrichtung 1, und damit zu einer Alarm auslösenden Dämpfungsänderung im optischen Wellenleiter.

Analog kann wie im gezeigten Beispiel auch am unteren Ende des Zauns 58 das Gittergeflecht anderthalb Maschen über den unteren Spanndraht 53 vorstehen. Wiederum ist eine erfindungsgemässe Detektionsvorrichtung 1 an der unteren Kante des Diagonalgeflechts 54 angebracht. Versucht ein Eindringling nun, den Zaun anzuheben, oder gar zu unterkriechen, indem er sich darunter hindurchzwängt, wird das ungestützte untere Ende des Zauns und damit die Detektionsvorrichtung 1 deformiert, und ein Alarm wird ausgelöst.

Am oberen Ende des Zauns sollte das Zaungeflecht 54 soweit über den Spanndraht 53 hinaus stehen, dass eine ausreichende Deformation des Geflechts bei mechanischer Belastung erfolgen kann. Gleichzeitig sollte der überstehende Teil jedoch ohne äussere Hilfsmittel stabil stehen können. In der Praxis sind ein bis zwei Geflechtmaschen ausreichend. Analog sollte auch am unteren Ende eine ausreichende Deformation möglich sein, hingegen die Lücke zwischen Boden 57 und unterem Spanndraht 53 nicht so gross, dass sie zu einfach durchkrochen werden kann. Die Pfosten 55 verlaufen vorteilhaft nur bis zum oberen Spanndraht 53, damit eine Leiter nicht einfach an den Pfosten angelegt und so eine Deformation der oberen Detektionsvorrichtung 1 eventuell umgangen werden kann.

Eine erfindungsgemässe Detektionsvorrichtung 1 kann auch in einem mittleren Bereich des Zauns 58 angeordnet werden. Um die volle Effektivität zu erreichen, sollte jedoch im entsprechenden Bereich eine gewisse Flexibilität des Zaungeflechts gegeben sein.

Anstelle eines Diagonalgeflechts können auch Gittermatten wie beispielsweise Doppelstab-, U-Profil- und Flachstab-Gitter verwendet werden. Gegebenenfalls kann ein Bereich einer solchen Gittermatte in einem zu überwachenden Bereich, in der Regel die obere Kante, absichtlich schwächer ausgestaltet sein, um eine Deformation schon bei geringeren Belastungen zu erlauben.

Bei Sperrhindernissen mit Gittermatten kann eine in diese eingeschlaufte oder mit dieser sonstwie verbundene erfindungsgemässe Detektionsvorrichtung auch dazu eingesetzt werden, um ein unerlaubtes Abschrauben und entfernen der Gittermatten vom Sperrhindernis auf einfache Weise zu detektieren. Wird eine Gittermatte im Bezug auf den Rest des Zauns bewegt, wird unweigerlich die Detektionsvorrichtung in ihrer Geometrie verändert, und ein Alarm kann ausgelöst werden..

### Bezugszeichenliste

- α: Schwenkungswinkel
- R: Biegungsradius
- 1: Detektionsvorrichtung
- 11: Längsachse
- 2, 2', 2": Gliederelement
- 21: Hohldraht, Röhrenelement
- 22: Kugelgelenkelement
- 23: Versteifungselement
- 3: optischer Wellenleiter
- 31, 31': Enden des optischen Wellenleiters
- 4: Scharnierelement
- 41: Federelement
- 42: Lücke
- 43: Manschette
- 5: Sperrhindernis
- 51: Stacheldrahtrolle
- 52: Befestigungspunkt
- 53: Spanndraht
- 54: Diagonalgeflecht
- 55: Pfosten
- 56: Fundamentsockel
- 57: Boden
- 58: Zaun
- 61: Sendereinheit
- 62: Empfängereinheit
- 63: Auswertungseinheit
- 64: Reflektor
- 65: Wellenleiter für Referenzsignal
- 7: Licht, Lichtsignal
- 8: Biegestelle

## Patentansprüche

1. Detektionsvorrichtung (1) zur Detektion von geometrischen Veränderungen in einer Struktur, insbesondere von geometrischen Veränderungen in einem Sperrhindernis (5), mit einer Kette aus einer Mehrzahl von schwenkbeweglich verbundenen, im wesentlichen starren Gliederelementen (2, 2', 2"), und mit mindestens einem optischen Wellenleiter (3), der entlang der Kette von Gliederelementen (2, 2', 2") verläuft, wobei der optische Wellenleiter (3) in und/oder auf den Gliederelementen (2) angeordnet und mit diesen form- und/oder kraftschlüssig verbunden ist, **dadurch gekennzeichnet, dass** benachbarte Gliederelemente (2, 2') jeweils über ein Scharnierelement (4) schwenkbeweglich verbunden sind.

2. Detektionsvorrichtung nach Anspruch 1, **dadurch gekennzeichnet, dass** das Scharnierelement (4) ein Federelement (41), bevorzugt eine Schraubenfeder, oder eine elastische Manschette (43) umfasst.

3. Detektionsvorrichtung nach Anspruch 1 oder 2, **dadurch gekennzeichnet, dass** ein Teil oder alle der Gliederelemente (2, 2') als Hohldraht oder Röhrenelement (21) ausgestaltet sind.

4. Detektionsvorrichtung nach einem Ansprüche 1 bis 3, **dadurch gekennzeichnet, dass** die Gliederelemente (2) abwechslungsweise als Hohldraht oder Röhrenelement (21) und als Kugelgelenkelement (22) ausgestaltet sind.

5. Detektionsvorrichtung (1) zur Detektion von geometrischen Veränderungen in einer Struktur, insbesondere von geometrischen Veränderungen in einem Sperrhindernis (5), mit einer Kette aus einer Mehrzahl von schwenkbeweglich verbundenen, im wesentlichen starren Gliederelementen (2, 2', 2"), und mit mindestens einem optischen Wellenleiter (3), der entlang der Kette von Gliederelementen (2, 2', 2") verläuft, **dadurch gekennzeichnet, dass** der optische Wellenleiter (3) auf den Gliederelementen (2) angeordnet und mit diesen form- und/oder kraftschlüssig verbunden ist.

6. Detektionsvorrichtung (1) zur Detektion von geometrischen Veränderungen in einer Struktur, insbesondere von geometrischen Veränderungen in einem Sperrhindernis (5), mit einer Kette aus einer Mehrzahl von schwenkbeweglich verbundenen, im wesentlichen starren Gliederelementen (2, 2', 2"), und mit mindestens einem optischen Wellenleiter (3), der entlang der Kette von Gliederelementen (2, 2', 2") verläuft, **dadurch gekennzeichnet, dass** die Gliederelemente (2) aus zwei Hälften bestehen, zwischen denen der optische Wellenleiter (3) form- und/oder kraftschlüssig fixiert ist.

7. Detektionsvorrichtung nach Anspruch 5 oder 6, **dadurch gekennzeichnet, dass** benachbarte Gliederelemente (2, 2') nur durch den optischen Wellenleiter (3) schwenkbeweglich verbunden sind.

8. Detektionsvorrichtung nach einem der vorangehenden Ansprüche, **dadurch gekennzeichnet, dass** ein Teil oder alle der Gliederelemente (2) als versteifter (23) Bereich des optischen Wellenleiters (3) ausgestaltet sind.

9. Detektionsvorrichtung nach einem der vorangehenden Ansprüche, **dadurch gekennzeichnet, dass** die Gliederelemente (2) biegefeste Streifen umfassen, beispielsweise Blechstanzstreifen, Blechteile oder längliche Plastikformteile.

10. Detektionsvorrichtung nach einem der vorangehenden Ansprüche, **gekennzeichnet durch** eine Sendereinheit (61), eingerichtet zur Einspeisung eines Lichtsignals (7) in den optischen Wellenleiter (3), und/oder eine Empfängereinheit (62), eingerichtet zur Detektion eines aus dem optischen Wellenleiter (3) austretenden Lichtsignals (7).

11. Detektionsvorrichtung nach Anspruch 10, **dadurch gekennzeichnet, dass** eine Sendereinheit (61) und eine Empfängereinheit (62) an zwei verschiedenen Enden (31, 31') des optischen Wellenleiters (3) angeordnet sind.

12. Detektionsvorrichtung nach Anspruch 10, **dadurch gekennzeichnet, dass** eine Sendereinheit (61) und eine Empfängereinheit (62) an einem ersten Ende (31) des optischen Wellenleiters (3) angeordnet sind, und am einem zweiten Ende (31') des Wellenleiters (3) ein Reflektorelement (64) angeordnet ist, welches dazu eingerichtet ist, ein aus dem optischen Wellenleiter (3) austretendes Lichtsignal (7) zurück in den optischen Wellenleiter zu reflektieren.

13. Sperrhindernis (5), insbesondere mit einem Zaun (58), einer Mauer und/oder einer Stacheldrahtrolle (51), mit einer Detektionsvorrichtung (1) nach einem der vorangehenden Ansprüche.

14. Sperrhindernis nach Anspruch 13, **dadurch gekennzeichnet, dass** die Detektionsvorrichtung (1) derart mit der Struktur des Sperrhindernisses (5) verbunden ist, dass eine Deformation des Sperrhindernisses (5) eine Änderung der Geometrie der Detektionsvorrichtung (1) verursacht, nämlich die Änderung eines Winkels α zwischen mindestens zwei benachbarten Gliederelementen (2, 2') der Detektionsvorrichtung (1).

15. Sperrhindernis nach Anspruch 13 oder 14, **dadurch gekennzeichnet, dass** das Sperrhindernis (5) einen Zaun (58) umfasst, wobei das untere und/oder das obere Ende des Zauns (58) um eine bestimmte Länge über einen Spanndraht (53) oder eine Querstange des Zauns (58) hinausragt, und eine Detektionsvorrichtung (1) am genannten unteren und/oder oberen Ende des Zauns angebracht ist.
